# FASCICULE DE BREVET EUROPEEN

(11) **EP 0 911 565 B1**
(45) Date de publication et mention de la délivrance du brevet: **27.03.2002**
(21) Numéro de dépôt: 98204024.8
(22) Date de dépôt: 26.07.1994
(51) Int. Cl.: F16L 37/084

(54) **Connexion rapide pour emmanchement d'un tube rigide dans un embout**
Schnellverbindung zur Verbindung von starren Rohren in einem Anschlussstück
Quick-acting connection between a rigid pipe and a connector

(30) Priorité: 01.10.1993 FR 9311706
(43) Date de publication de la demande: 28.04.1999
(62) Demande divisionnaire de: 94401709.4
(73) Titulaire: Etablissements CAILLAU, 92130 Issy-les-Moulineaux (FR)
(72) Inventeur: Detable, Pascal, 41130 Villedieu (FR); André, Michel, 41200 Romorantin Lanthenay (FR)
(74) Mandataire: Intès, Didier Gérard André

(56) Documents cités:
- EP-A- 0 511 891
- EP-A- 0 525 414
- EP-A- 0 530 778
- DE-A- 3 143 015
- DE-A- 3 837 492
- FR-A- 2 266 091

## Description

On connaît déjà, notamment par les brevets FR-A-2.576.771, 2.614.084, 2.617.943, et EP-A-440 564, 511 891, 605 801, 627 592, divers types de connexion rapide d'un tube rigide emmanché dans un embout pour y être verrouillé axialement et assurer en outre un raccordement étanche de deux canalisations véhiculant des fluides, quelquefois à température élevée. L'embout d'une telle connexion rapide, très utilisée dans les fabrications de grande série, notamment dans l'industrie automobile, comporte essentiellement, à partir de l'entrée de l'embout pour le tube :
- un anneau de verrouillage, élastiquement déformable dans le sens radial et disposé dans un logement de l'embout, susceptible de constituer une butée axiale pour un bourrelet faisant radialement saillie par rapport à la surface extérieure du tube,
- un dispositif d'étanchéité, en général au moins un joint annulaire, également disposé dans un logement de l'embout et susceptible d'être en contact avec la surface extérieure du tube rigide après son emmanchement.

Ce type de connexion permet le verrouillage automatique du tube au cours de son emmanchement dans l'embout, l'anneau de verrouillage se déformant élastiquement dans le sens radial lors du passage du bourrelet du tube. Une zone spéciale de l'anneau de verrouillage fait cependant radialement saillie à l'extérieur de l'embout, au travers d'une ouverture ménagée dans la paroi de ce dernier de sorte qu'une pression sur cette zone spéciale permet à nouveau de déformer radialement l'anneau pour autoriser le démontage de la connexion.

Généralement la forme des flancs du bourrelet du tube n'est pas imposée par les utilisateurs mais, de plus en plus, certains d'entre eux exigent, aussi bien pour des raisons de sécurité que pour faciliter l'interchangeabilité, que le flanc du bourrelet servant de face d'appui à l'anneau de verrouillage soit situé dans un plan sensiblement radial par rapport à l'axe du tube. Cette première exigence impose diverses contraintes, devenues usuelles, dans la conception et la réalisation de la connexion.

D'autre part, les utilisateurs formulent, pour certaines applications, d'autres exigences quelquefois contradictoires.

C'est ainsi, par exemple, qu'il est fréquemment demandé que lors du premier montage de la connexion, un témoin de son bon verrouillage, éventuellement détachable de l'embout, permette un contrôle facile. Mais il est en même temps demandé qu'un témoin visible du bon verrouillage soit également prévu, permettant à nouveau le contrôle après un démontage de la connexion.

De même, il est fréquemment demandé que le démontage puisse être effectué manuellement, de préférence sans aucun outil ou, au contraire, il sera exigé que ce démontage ne soit possible qu'au moyen d'un outil spécifique, ce qui l'interdit à toute personne ne le possédant pas.

La demanderesse a donc cherché à améliorer la structure connue de l'embout d'une connexion rapide satisfaisant aux contraintes usuelles dans le cas du raccordement d'un tube dont le bourrelet présente un flanc radial pour l'appui de l'anneau de verrouillage, de façon que cet embout soit susceptible de recevoir, sans modification substantielle, des éléments complémentaires appropriés pour remplir tout ou partie des fonctions supplémentaires exigées par les utilisateurs, même si certaines d'entre elles apparaissent a priori contradictoires ou incompatibles sur la même connexion.

L'invention concerne donc une connexion rapide pour le raccordement étanche d'un tube rigide dans un embout, ledit tube étant pourvu, à quelque distance de son extrémité libre destinée à être emmanchée dans l'embout, d'un bourrelet faisant radialement saillie par rapport à la surface extérieure du tube et présentant un flanc sensiblement radial opposé à ladite extrémité. L'embout présente un premier logement interne pour recevoir un joint annulaire d'étanchéité susceptible de venir en contact avec la surface extérieure du tube entre son extrémité libre et le bourrelet. Un deuxième logement interne est également prévu dans l'embout pour recevoir un anneau de verrouillage. Ce dernier, de forme oblongue et élastiquement déformable dans le sens radial, présente des portions sensiblement cylindriques diamétralement opposées, dont le diamètre, à l'état libre, est au plus égal au diamètre du tube et qui sont susceptibles de constituer une butée pour le flanc radial du bourrelet du tube. L'anneau comporte d'autre part au moins une zone faisant radialement saillie sur la surface extérieure de l'embout à travers une ouverture ménagée dans celui-ci, ladite zone étant située à une extrémité du grand diamètre du profil oblong.

Selon l'invention, l'anneau de verrouillage est formé par une bande métallique mince, sa zone faisant radialement saillie à l'extérieur de l'embout est constituée par un pontet en **U** inversé dont la base forme, pour l'essentiel, la partie radialement saillante à l'extérieur de l'embout, l'anneau de verrouillage est ouvert et ses deux extrémités libres sont immobilisées sur la paroi de l'embout.

Grâce à cette structure, et plus particulièrement à celle de l'anneau de verrouillage, l'embout de la connexion rapide peut ne comporter qu'un nombre limité d'éléments en métal mince, généralement emboutis et sertis les uns aux autres. L'encombrement radial de la connexion est de ce fait limité, ce qui est particulièrement apprécié par les utilisateurs si le raccordement des canalisations doit être effectué dans des zones encombrées. De plus, les éléments essentiels de la connexion étant métalliques, ils seront peu sensibles aux variations de température et la tenue en service du raccordement sera généralement améliorée par rapport aux connexions analogues. Enfin, comme on le verra plus loin, la structure de base de la connexion selon l'invention peut être équipée, sans modifications importantes, d'organes complémentaires permettant de remplir des fonctions secondaires exigées des utilisateurs pour certaines applications de la connexion.

L'invention sera mieux comprise et ses avantages ainsi que diverses caractéristiques secondaires apparaîtront au cours de la description qui va suivre d'un exemple de réalisation et de quelques variantes en référence aux dessins annexés dans lesquels :
- La figure 1 est une vue éclatée, en perspective, des divers éléments constituant une connexion rapide, avant l'assemblage de l'embout, l'organe de verrouillage étant de type fermé et étant visé par le brevet européen 0 651 198, mais pas par le présent brevet.
- La figure 2 est une vue en coupe axiale, avec arrachement partiel, d'une connexion selon la figure 1, avant le verrouillage du tube.
- La figure 3 est une vue analogue à la figure 2, avec arrachement partiel, après verrouillage du tube.
- Les figures 4 et 5 sont des vues analogues aux figures 2 et 3 dans le cas d'une variante de réalisation équipée d'un témoin de verrouillage permanent et coulissant, variante pour laquelle l'anneau de verrouillage, analogue à celui des figures 1 à 3, ne fait pas partie de l'invention.
- La figure 6 est une vue en perspective du témoin de verrouillage de la figure 4.
- La figure 7 est une vue en coupe analogue à la figure 5, montrant un embout ayant un anneau de verrouillage conforme à l'invention.
- La figure 8 est une coupe selon VIII-VIII de la figure 7.
- La figure 9 est une vue en coupe analogue à la figure 7 dans le cas d'une variante de réalisation du témoin de verrouillage, le tube étant supposé extrait de l'embout.
- La figure 10 est une coupe selon X-X de la figure 9.
- La figure 11 est une vue en coupe d'une structure d'embout analogue à celle de la figure 9, équipée d'un témoin de verrouillage instantané.
- La figure 12 est une coupe suivant XII-XII de la figure 11.
- Les figures 13 et 14 sont des vues partielles analogues, respectivement en coupe radiale et en coupe axiale dans le cas d'une variante de réalisation.
- La figure 15 est une vue partielle analogue à la figure 13 dans le cas d'une autre variante de réalisation
- Les figures 16 et 17 sont des vues partielles analogues aux figures 4 et 5 dans le cas d'une variante comportant en outre un témoin détachable.
- La figure 18 est une vue de face du témoin détachable, suivant la flèche ***F'*** de la figure 16.

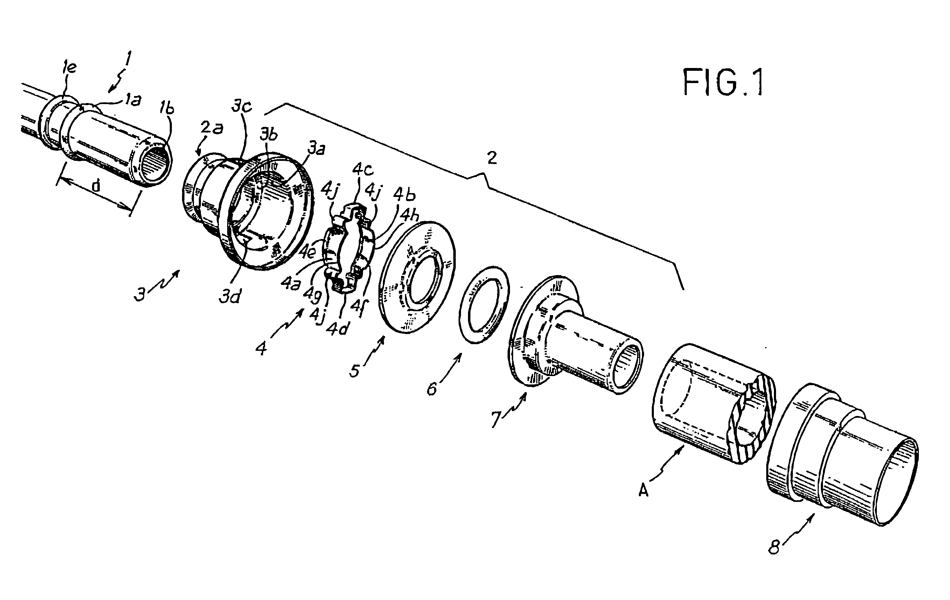

Si l'on se reporte tout d'abord aux figures 1, 2 et 3, on voit une connexion qui comporte, d'une part, un tube ***1*** en matériau rigide, tel que du métal, ou semi-rigide, tel qu'une matière plastique, d'autre part, un embout désigné par la référence générale ***2*** ; la partie arrière de ce dernier, située à droite sur les figures, est assemblée de façon étanche à un tuyau souple ***A*,** tel qu'une Durit en caoutchouc ou matériau analogue. L'embout ***2*** est constitué par un corps ***3,*** un anneau de verrouillage ***4,*** une paroi radiale annulaire ***5*,** un joint annulaire d'étanchéité ***6,*** et une douille ***7.*** Une douille extérieure ***8*** est susceptible d'enserrer le tuyau souple ***A*** préalablement emmanché sur la douille ***7.*** Les éléments ***3, 5, 7*** et ***8*** sont, de préférence, réalisés en métal embouti.

Ainsi qu'on le sait, notamment par le brevet européen 440 564, la douille ***7*** permet de constituer un premier logement annulaire, fermé par la paroi radiale ***5*,** pour le joint ***6,*** lesdites douille et paroi radiale étant assemblées au corps ***3*** de l'embout par un sertissage de leur périphérie. De plus, après emmanchement du tuyau souple ***A*** sur la partie arrière de la douille ***7,*** la douille extérieure ***8*** coiffe l'extrémité libre du tuyau et en assure la fixation par pincement ; un sertissage de la périphérie de la douille extérieure ***8*** sur celle du corps ***3*** termine la formation de la connexion.

L'embout ***2*** présente un deuxième logement annulaire désigné par ***3a*** et formé dans le corps ***3.*** Dans ce logement est disposé l'anneau de verrouillage ***4*** dont les bords antérieurs, situés à gauche sur les figures, peuvent prendre appui, au moins dans certaines zones que l'on précisera plus loin, sur la face radiale interne ***3b*** du logement, située du côté de l'entrée du corps. Cette dernière constitue l'entrée ***2a*** de l'embout ***2*** et est destinée à recevoir le tube ***1.***

Le tube ***1*** est cylindrique et présente un bourrelet ***1a*,** situé à une distance ***d*** de son extrémité libre ***1b*** et faisant saillie radialement sur sa surface extérieure. Le bourrelet ***1a*** est constitué par une rampe ***1c*,** du côté de l'extrémité libre ***1b*** mais son flanc ***1d*** opposé à cette extrémité est sensiblement radial. On sait que ce flanc radial est destiné à servir de face d'appui sur l'anneau de verrouillage après emmanchement du tube ***1*** dans l'embout ***2.***

Le tube ***1*** comporte avantageusement un deuxième bourrelet saillant ***1e*,** situé un peu en arrière du premier par rapport à l'extrémité libre ***1b*,** le diamètre extérieur de ce deuxième bourrelet étant au moins égal au diamètre extérieur du flanc radial ***1d*** du premier bourrelet.

L'extrémité libre ***1b*** du tube ainsi que l'entrée ***2a*** de l'embout sont de préférence chanfreinées, le diamètre intérieur de l'entrée ***2a*** étant sensiblement égal au diamètre extérieur du bourrelet ***1e*,** cependant que le diamètre intérieur de la douille ***7*** est sensiblement égal au diamètre du tube ***1*.**

L'anneau de verrouillage ***4*** est formé par une bande métallique mince enroulée sur elle-même et présentant un profil fermé généralement oblong. Le petit diamètre de ce profil est, à l'état libre, sensiblement égal au diamètre extérieur du tube et, en tout cas, inférieur à celui du bourrelet ***1a***.

Dans sa région centrale, l'anneau ***4*** présente deux portions cylindriques ***4a*** et ***4b*,** cependant que dans les régions situées aux extrémités du grand diamètre du profil, la bande constituant l'anneau est conformée en pontets ***4c*** et ***4d*** en **U** inversé, la base du **U** définissant elle-même l'extrémité du grand diamètre du profil.

Les bords antérieurs ***4e*** et ***4f*** des portions cylindriques ***4a*** et ***4b*,** c'est-à-dire ceux situés du côté de l'entrée ***2a*** de l'embout sont évasés. Ainsi qu'on le verra plus loin, cette disposition est de nature à faciliter l'emmanchement du tube dans l'embout. De préférence, le diamètre extérieur des bords évasés ***4e***-***4f*** est légèrement inférieur au diamètre intérieur de l'entrée ***2a*** de l'embout. D'autre part, les bords postérieurs ***4g*** et ***4h*** des mêmes portions cylindriques font axialement saillie par rapport au reste du bord postérieur de l'anneau ***4.***

La région du pontet ***4c*** constitue la zone de raccordement des deux extrémités de la bande formant l'anneau. Ces deux extrémités se recouvrent, par exemple à la base du **U** et sont fixées l'une à l'autre par tout moyen approprié, tel qu'un rivetage ou un soudage par points. Toutefois, pour des raisons qui apparaîtront plus loin, il peut être avantageux que la liaison mécanique entre les deux extrémités de la bande ne soit pas rigide, notamment en compression. Ainsi la déformabilité de l'anneau n'est affectée par aucune rigidification locale qui pourrait se révéler gênante.

Entre les portions cylindriques ***4a-4b*** et les pontets ***4c-4d*** l'anneau ***4*** présente avantageusement des oreilles ***4j*** faisant radialement saillie par rapport au profil oblong de l'anneau. Les oreilles ***4j*** sont, de préférence, au nombre de quatre, disposées symétriquement les unes des autres par rapport au centre de l'anneau. En raison de la forme oblongue de l'anneau et de la saillie radiale des oreilles, ces dernières constituent une zone d'appui efficace du bord antérieur de l'anneau sur la face radiale interne ***3b*** du logement ***3a*** sans que les bords antérieurs ***4e*** et ***4f*** des portions cylindriques soient elles-mêmes en contact avec cette face interne ***3b***.

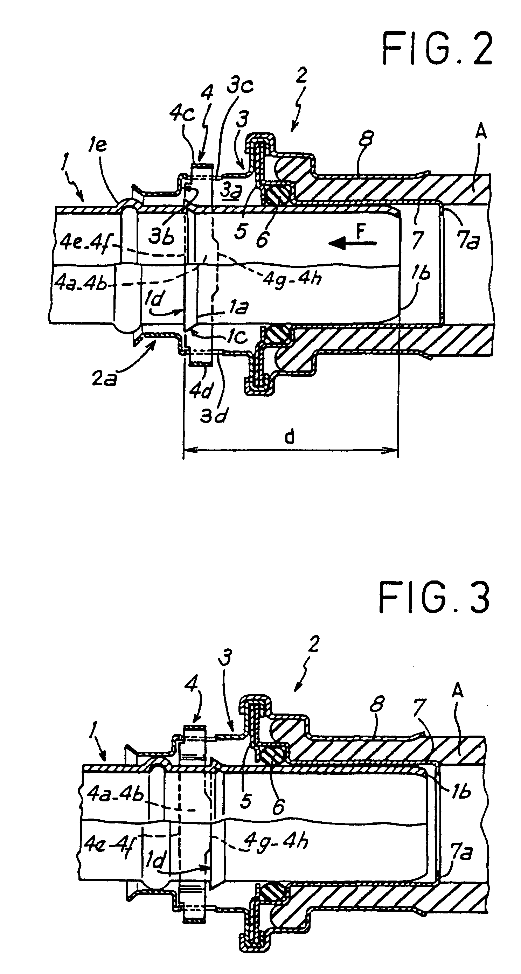

Il convient encore d'indiquer que dans la région du logement ***3a*** de l'anneau, le corps ***3*** présente au moins une ouverture dont les dimensions sont suffisantes pour y faire pénétrer une partie de l'anneau ***4*** faisant radialement saillie à l'extérieur du corps ***3.*** Comme représenté sur les figures 1 à 3, il est prévu deux ouvertures ***3c*** et ***3d*,** diamétralement opposées, dont la forme correspond sensiblement à celle de la base des pontets ***4c*** et ***4d*** lorsque l'anneau de verrouillage a la forme de l'anneau 4. A cet égard, on soulignera que le grand diamètre du profil oblong de l'anneau est, à l'état libre de ce dernier, quelque peu supérieur au diamètre interne du logement ***3a.*** Ainsi qu'on le voit bien sur la figure 2, lorsque l'anneau ***4*** est mis en place dans son logement ***3a,*** les pontets ***4c, 4d*** sont, d'une part, engagés dans les ouvertures ***3c*, *3d*** dans lesquelles ils sont immobilisés axialement, avec cependant tous les jeux nécessaires au montage, et font, d'autre part, légèrement saillie par leur base, à la surface extérieure du corps ***3.***

Comme on l'a indiqué plus haut, il pourrait n'exister qu'une seule ouverture ***3c*,** le pontet ***4d*** étant alors soit supprimé, soit en appui sur la face cylindrique interne du logement ***3a***. On reviendra plus loin sur ce type de réalisation.

L'anneau de verrouillage est bien évidemment disposé dans le logement ***3a*** du corps ***3*** avant le sertissage de ce dernier sur la périphérie extérieure de la paroi radiale ***5*** et de la douille ***7*** dans les conditions indiquées plus haut. On notera ici que la douille ***7*** possède à son extrémité arrière une butée ***7a*** et que la distance axiale de cette butée aux bords postérieurs ***4g***-***4h*** des parties cylindriques de l'anneau ***4*** est sensiblement égale, mais de préférence légèrement supérieure à la distance ***d*** précédemment définie.

Le fonctionnement de cette connexion est sans doute déjà apparu à l'homme du métier ; on en soulignera cependant les points importants en se référant plus particulièrement aux figures 2 et 3.

L'extrémité ***1b*** du tube ***1*** est engagée dans l'entrée ***2a*** de l'embout et pénètre dans la douille ***7*** ; la surface extérieure du tube entre tout d'abord en contact avec le joint annulaire ***6*** puis avec la surface interne de la douille. L'emmanchement du tube est poursuivi jusqu'à ce que l'extrémité ***1b*** vienne en appui sur la butée ***7a*** de la douille.

Au cours de ce mouvement, la rampe ***1c*** du bourrelet ***1a*** rencontre les bords évasés ***4e-4f*** des portions cylindriques de l'anneau ***4,*** qui sont ainsi quelque peu déformées radialement, de façon élastique. Lorsque la rampe ***1c*** a dépassé les bords postérieurs ***4g***-***4h*** de l'anneau, celui-ci se rétracte élastiquement et ses parties cylindriques ***4a-4b*** viennent en contact avec la surface extérieure du tube entre les bourrelets ***1a*** et ***1e*,** cependant que lesdits bords postérieurs ***4g-4h*** sont susceptibles de constituer un appui pour le flanc ***1d*** du bourrelet. Le tube est alors verrouillé axialement dans l'embout puisque les oreilles ***4j*** de l'anneau peuvent s'appuyer sur la face interne ***3b*** du logement de l'anneau dans le corps ***3*** (FIG.3). On notera toutefois que le verrouillage laisse subsister des jeux axiaux qui sont éliminés lorsqu'un fluide sous pression est véhiculé par la canalisation sur laquelle se trouve la connexion.

On peut enfin rappeler que le bourrelet supplémentaire ***1e*,** qui se trouve en contact avec la surface intérieure du corps dans la région de l'entrée ***2a*** de l'embout, facilite le guidage du tube dans la phase finale de son emmanchement et surtout évite, en coopération avec la douille ***7,*** les oscillations radiales du tube dans l'embout.

Le démontage de la connexion s'effectue facilement. L'un au moins des pontets ***4c***-***4d*** faisant saillie à l'extérieur de l'embout, notamment à travers l'ouverture ***3c,*** il suffit de les rapprocher radialement l'un de l'autre, soit manuellement, soit à l'aide d'un outil approprié, pour provoquer une déformation élastique de l'anneau.

Grâce à la forme oblongue de ce dernier, sa région centrale cylindrique voit son diamètre augmenter, libérant ainsi l'appui du flanc ***1c*** du bourrelet du tube sur les bords postérieurs ***4g***-***4h*** de l'anneau, ce qui permet l'extraction du tube de l'embout dans le sens de la flèche ***F*** (FIG.2).

Bien que l'on ait jusqu'à présent décrit une connexion dans laquelle les deux extrémités du profil oblong de l'anneau de verrouillage sont conformées en pontet en **U**, il convient de souligner à nouveau que seule l'une au moins de ces extrémités doit présenter cette forme particulière.

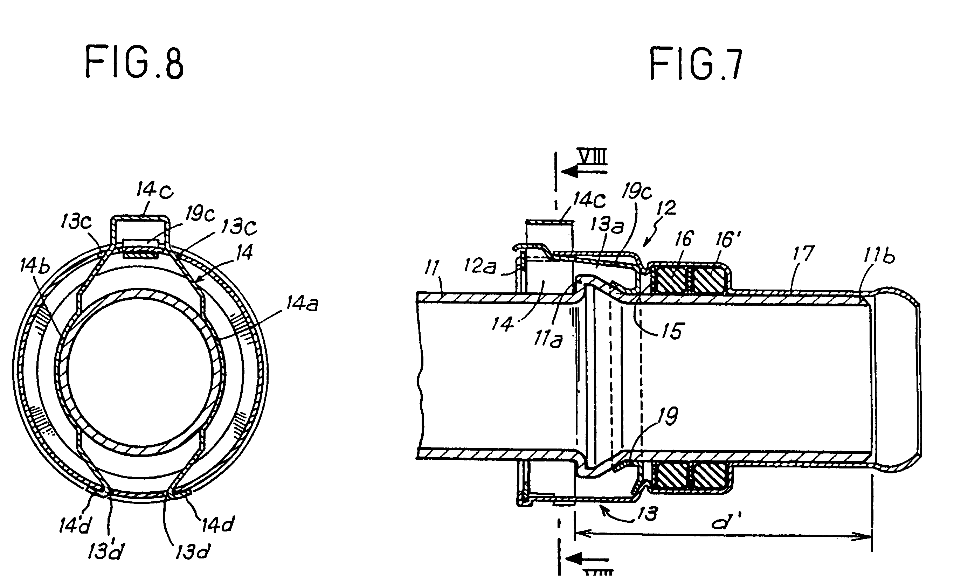

L'embout selon l'invention représenté sur les figures 7 et 8 auxquelles on se référera maintenant est applicable notamment aux connexions de faible diamètre, telles que les connexions disposées sur les canalisations de carburant des véhicules automobiles.

On retrouve sur la figure 7 une structure analogue à celle représentée sur les figures 1, 2 et 3. Les éléments déjà décrits portent les mêmes références augmentées du 10.

Le tube ***11*** ne possède qu'un seul bourrelet ***11a*** situé à une distance ***d****'* de son extrémité libre ***11b*** destinée à être emmanchée dans l'embout ***12.*** Celui-ci est constitué par un corps ***13*** dont la partie arrière ***17,*** située à droite sur les figures, présente une forme bien connue, dite *"en sapin"* ou *"en olive",* sur laquelle une tubulure en matériau souple, caoutchouc ou matière plastique, est susceptible d'être emmanchée à force et fixée par tout moyen approprié. Entre sa partie arrière ***17*** et son entrée ***12a,*** l'embout présente un épaulement qui constitue un logement annulaire pour deux joints d'étanchéité ***16*** et ***16'*.** Ce logement est fermé par une rondelle ***15*** emmanchée à force ou sertie. Au-delà du logement des joints d'étanchéité, vers l'entrée ***12a,*** le corps de l'embout présente un autre épaulement formant un deuxième logement annulaire ***13a*** qui est fermé par une rondelle sertie constituant l'entrée ***12a*** de l'embout ***12.***

Dans le logement annulaire ***13a*** est disposé un anneau ouvert de verrouillage ***14*** constitué par une bande métallique mince et souple, pliée en forme d'agrafe oblongue. L'agrafe présente ainsi deux portions centrales ***14a*** et ***14b*** sensiblement cylindriques et, en son sommet, un pontet en **U** inversé ***14c***. Ses deux extrémités libres ***14d*, *14'd*** sont destinées à être assujetties à la paroi du logement ***13a*** dans des conditions indiquées ci-après.

Le logement annulaire ***13a*** comporte au moins une ouverture ***13c*,** généralement formée par une large fente débouchant vers l'extrémité d'entrée de l'embout, qui est axialement fermée par la rondelle ***12a*,** après son sertissage.

Dans une zone de la paroi du logement ***13a*,** diamétralement opposée à l'ouverture ***13c*,** sont prévues deux fentes sensiblement axiales ***13d*,** et ***13'd*,** elles aussi axialement fermées après sertissage de la rondelle ***12a****.*

Ainsi qu'on le voit bien sur les figures, le pontet ***14c*** est engagé, de façon coulissante, dans l'ouverture ***13c*,** cependant que des pattes situées aux extrémités ***14d*** et ***14'd*** de l'agrafe ***14*** sont introduites dans les fentes ***13d*** et ***13'd*** avant d'être repliées sur la face extérieure de la paroi du logement ***13a,*** ce qui assure l'assujettissement des extrémités ***14d*** et ***14'd*** de l'agrafe à ladite paroi.

A l'état libre, le petit diamètre de l'agrafe ***14*** est au plus égal au diamètre du tube ***11.*** Ses portions centrales ***14a*** et ***14b*** définissent avantageusement une forme légèrement tronconique à partir de l'entrée ***12a*** de l'embout, de sorte que leurs bords antérieurs sont naturellement évasés par rapport à leurs bords postérieurs sans qu'il soit nécessaire de prévoir des dispositions particulières à cet effet.

Après montage de l'anneau ouvert ***14*** et sertissage de la rondelle ***12a*,** l'embout ***12*** est prêt à recevoir le tube ***11*** et à assurer son verrouillage, dans des conditions analogues à celles décrites plus haut en référence aux figures 1, 2 et 3. Le démontage de la connexion s'effectue également de la manière déjà décrite, par déformation radiale de l'anneau ***14*** sous l'effet d'une pression exercée sur le pontet ***14c.***

La structure de la connexion qui vient d'être décrite, dans l'une ou l'autre de ses variantes de réalisation, est susceptible d'être facilement équipée d'organes complémentaires ou de recevoir des modifications mineures permettant d'assurer des fonctions spécifiques parfois demandées par les utilisateurs.

C'est ainsi, par exemple, que certains utilisateurs demandent un témoin permanent du bon verrouillage du tube dans l'embout. L'invention permet de satisfaire à cette exigence dans l'une ou l'autre des variantes de réalisation déjà décrites.

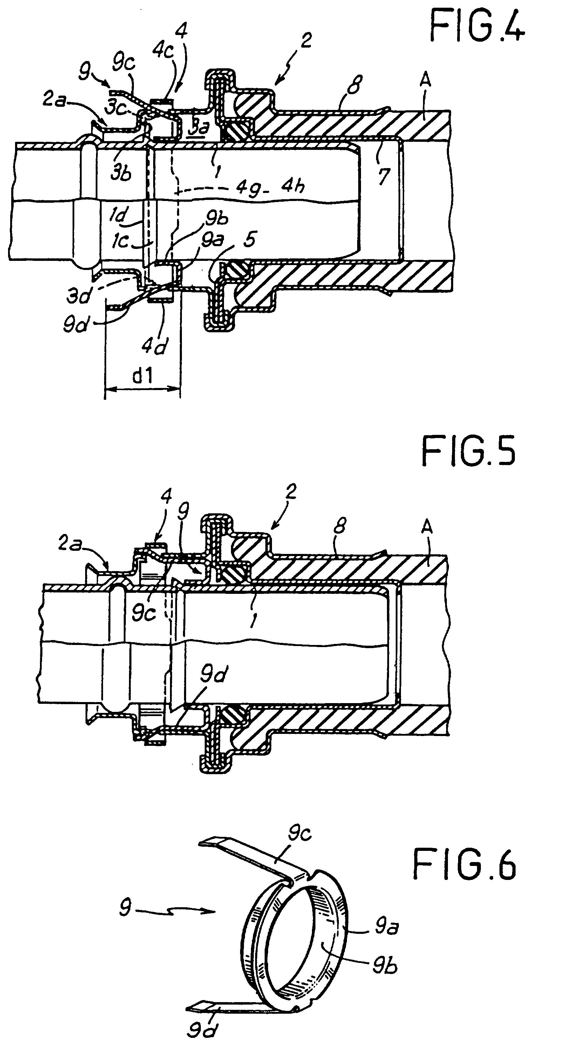

Les figures 4 et 5 sont analogues aux figures 2 et 3 mais l'embout qu'elles représentent comporte un témoin de verrouillage bien visible sur la figure 6.

Le témoin permanent de verrouillage, désigné par la référence générale ***9*** est constitué par une bague ***9a*,** généralement métallique, dont le diamètre intérieur est sensiblement égal à celui du tube ***1*** et dont le diamètre extérieur est au plus égal au diamètre intérieur du logement ***3a***. La périphérie intérieure de la bague se prolonge axialement par un manchon ***9b*,** cependant qu'à sa périphérie extérieure sont disposées deux pattes ***9c*** et ***9d*** s'étendant axialement dans la même direction que le manchon ***9a*.** Les deux pattes ***9c*** et ***9d*** sont diamétralement opposées et leur longueur ***d***_{***1***} sera définie ultérieurement.

Ainsi qu'on le voit bien sur la figure **4,** le témoin ***9*** est disposé dans le logement ***3a*,** son manchon ***9b*** et les pattes ***9c*** et ***9d*** s'étendant en direction de l'entrée ***2a*** de l'embout à travers les pontets ***4c***-***4d*** de l'anneau ***4.***

Avant l'emmanchement du tube ***1,*** les pattes ***9c***-***9d*,** traversant les ouvertures ***3c***-***3d*,** grâce à leur flexibilité, sont bien visibles à l'extérieur de l'embout, au-delà des pontets ***4c***-***4d***. D'autre part, le manchon ***9b*** est engagé dans la région centrale de l'anneau ***4.*** Ainsi le mouvement d'emmanchement du tube ***1*** jusqu'à la position représentée sur la figure ***4*** ne rencontre pratiquement aucune autre résistance que celle nécessaire pour franchir le joint ***6.***

Le mouvement d'emmanchement se poursuivant, la rampe ***1c*** repousse le manchon ***9b*** du témoin ***9*** qui coulisse vers la droite de la figure **4** dans le logement ***3a***. Simultanément les pattes ***9c***-***9d*** coulissent sous les pontets ***4c***-***4d***. Lorsque le manchon ***9b*** a quitté les portions cylindriques de l'anneau ***4,*** celles-ci s'appuient sur la rampe ***1c*** et le verrouillage axial du tube s'opère, de la façon décrite plus haut, dès que les bords postérieurs ***4g***-***4h*** de l'anneau peuvent constituer un appui pour le flanc radial ***1d*** du bourrelet ***1a*** du tube. Dans cette position, visible sur la figure ***5*,** les pattes flexibles ***9c***-***9d*** du témoin ***9*** sont pratiquement cachées en totalité par la base des pontets ***4c***-***4d***. C'est l'indication certaine du bon verrouillage du tube dans l'embout. Il suffit, à cet effet, que la longueur ***d***_{***1***} des pattes soit voisine de la distance axiale entre la paroi radiale **5** et la face interne ***3b*** du logement ***3a***.

De même, si l'on se reporte à nouveau aux figures 7 et 8, on voit un témoin de verrouillage ***19,*** analogue à celui qui vient d'être décrit, mais présentant une seule patte flexible ***19c*** montée coulissante sous l'unique pontet ***14c***. Ce témoin pourrait également posséder une deuxième patte non représentée, diamétralement opposée à la patte ***19c***.

L'effacement de la patte ***19c*** sous le pontet ***14c*** s'effectue au cours de l'emmanchement du tube ***11*** dans l'embout ***12*** d'une façon tout à fait analogue à celle qui a été décrite plus haut.

On notera cependant ici que l'effacement des témoins de verrouillage qui viennent d'être décrits, est progressif car il accompagne le mouvement d'emmanchement du tube. A l'inverse, lorsque ce dernier est extrait de l'embout, l'élasticité de la ou des pattes du témoin lui permet d'être ramené vers l'entrée de l'embout, dans une position, analogue à celle visible sur la figure 4, où chaque patte est bien visible au-delà du pontet de l'anneau de verrouillage. La forme des ouvertures ménagées dans la paroi du logement de l'anneau de verrouillage pour le passage des pontets est étudiée pour faciliter l'appui de la face externe des pattes et, à cet égard, la réalisation représentée sur la figure 7 est avantageuse.

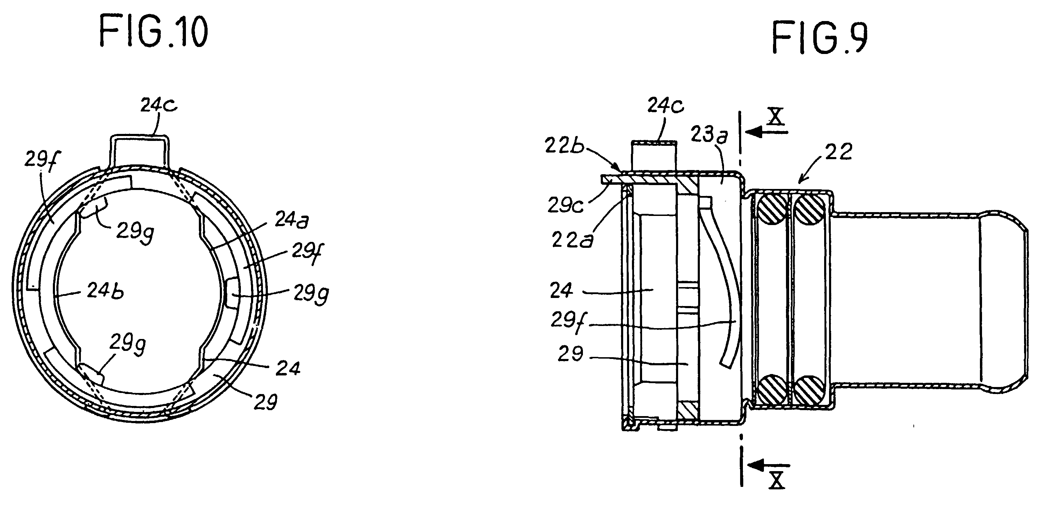

Si l'on se reporte maintenant aux figures 9 et 10 on voit une variante de réalisation dans laquelle le témoin de verrouillage progressif est en matière plastique. Les éléments déjà décrits et représentés sur les figures 7 et 8 portent les mêmes références augmentées de 10 (éventuellement de 20 par rapport à celles des éléments des figures 4 et 5). L'embout ***22*** possède une structure analogue à celle représentée sur la figure 7, son anneau de verrouillage ***24*** étant, là encore, constitué par une agrafe avec un seul pontet ***24c*.**

Il doit être cependant entendu que cet anneau pourrait être fermé, avec deux pontets diamétralement opposés, comme cela a été décrit en référence aux figures 2 et 3.

Le témoin de verrouillage ***29*** est constitué par une bague en matière plastique montée coulissante dans le logement ***23a*** de l'anneau ***24,*** cette bague possédant, sur sa face opposée à l'entrée de l'embout, une pluralité de lamelles élastiques ***29f*** prenant appui sur le fond annulaire du logement ***23a***. Sur sa périphérie interne, la bague ***29*** présente une pluralité d'ergots ***29g*** susceptibles d'entrer en prise uniquement avec la rampe du bourrelet du tube au cours de l'emmanchement de celui-ci.

Enfin du côté de l'entrée ***22a*** de l'embout, la bague ***29*** présente au moins une patte axiale ***29c*** susceptible de coulisser dans une ouverture ***22b*** ménagée dans la rondelle d'entrée ***22a*** et éventuellement dans le sertissage correspondant de l'embout.

Le fonctionnement du témoin de verrouillage ***29*** est tout à fait analogue à celui des témoins ***9*** et ***19*** décrits plus haut, la bague étant repoussée par la rampe du tube (non représenté) vers le fond du logement ***23a*** contre l'action des lamelles élastiques ***29f***. Toutefois on notera que la matière plastique peut être colorée facilement, de sorte qu'avant son effacement progressif dans le logement ***23a*,** la patte ***29c*** du témoin est bien visible à l'extérieur de l'embout, ainsi que l'on s'en rend compte à l'examen de la figure 9. Un autre avantage de cette réalisation est l'absence totale d'agressivité de l'extrémité libre de la patte ***29c*** avant le verrouillage du tube. Lors du démontage de la connexion, les lamelles élastiques ***29f*** repoussent la bague ***29*** vers l'entrée de l'embout, rendant à nouveau visible la patte ***29c***.

Comme on l'a indiqué, la mise en place des témoins de verrouillage ***9, 19*** ou ***29*** est progressive. Or certains utilisateurs souhaitent disposer d'un témoin dont la mise en place est instantanée et s'accompagne, si possible, d'un bruit indiquant le verrouillage.

Tout en conservant l'une ou l'autre des structures d'embout qui ont été décrites plus haut, l'invention permet de satisfaire facilement à cette exigence particulière.

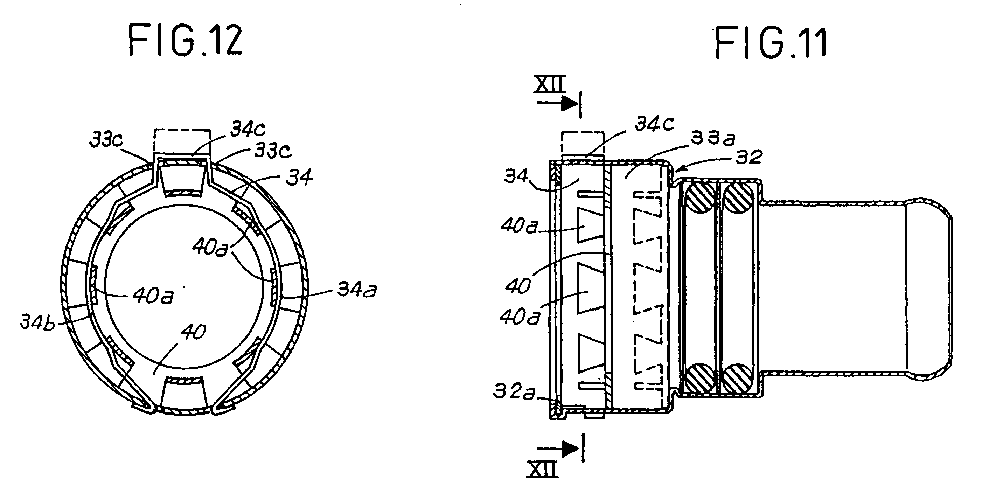

Si l'on se reporte maintenant aux figures 11 et 12, on voit une structure d'embout ***32*** analogue à celle représentée sur la figure 9, les éléments déjà décrits possédant les mêmes références augmentées de 10.

Dans le logement ***33a*** est montée coulissante une rondelle crénelée ***40*** dont le diamètre extérieur est voisin du diamètre du logement et dont le diamètre intérieur est sensiblement égal à celui du tube (non représenté) mais inférieur à celui de son bourrelet de verrouillage. Sur un diamètre approprié, au moins égal à celui du bourrelet du tube, certains créneaux de la rondelle sont rabattus pour former des pattes ***40a*** s'étendant axialement.

Au montage de l'embout ***32,*** après mise en place des joints d'étanchéité, la rondelle crénelée ***40*** est introduite dans le logement ***33a*,** l'extrémité de ses pattes ***40a*** étant dirigée vers l'entrée de l'embout. L'agrafe de verrouillage ***34*** est alors disposée autour des pattes ***40a*,** cependant que son pontet ***34c*** est engagé dans l'ouverture prévue à cet effet dans la paroi du logement et que les extrémités libres de l'agrafe sont elles-mêmes fixées à l'embout dans des conditions analogues à celles décrites plus haut. La rondelle d'entrée ***32a*** est enfin sertie pour constituer l'entrée de l'embout ***32.***

Ainsi qu'on le voit bien sur la figure 12, les portions cylindriques ***34a*** et ***34b*** de l'agrafe de verrouillage qui reposent sur la face externe de certaines pattes ***40a*** définissent, après montage de l'embout, un passage axial dont le diamètre est supérieur à celui du bourrelet du tube destiné à être emmanché dans l'embout. Ceci résulte de la déformation radiale élastique de l'agrafe ***34,*** qui a elle-même pour conséquence que son pontet ***34c*** affleure sur la paroi extérieure du logement ***33a*,** ainsi qu'on l'a représenté en trait plein sur les figures.

En revanche, la périphérie interne de la rondelle ***40*** constitue un obstacle axial dans le passage défini par les portions cylindriques ***34a*** et ***34b*,** dont l'utilité va apparaître dans ce qui suit.

Lorsqu'on introduit le tube à verrouiller dans l'embout ***32*,** son bourrelet ne rencontre aucun obstacle jusqu'à ce que sa rampe atteigne la rondelle ***40.*** Celle-ci se trouve ensuite repoussée au cours de la poursuite de l'emmanchement du tube jusqu'à la position représentée en trait ponctué sur la figure 11.

L'agrafe de verrouillage ***34*** n'étant plus maintenue par les pattes ***40a*,** peut alors s'appliquer brusquement sur la paroi du tube et assurer son verrouillage dans les conditions qui ont été décrites plus haut. Simultanément, un bruit métallique de claquement peut être perçu, cependant que le pontet ***34c*** fait saillie sur la paroi externe de logement ***33a*** et vient occuper la position représentée en trait ponctué sur les figures 11 et 12. Cette saillie du pontet constitue le témoin visible du bon verrouillage du tube dans l'embout.

On a indiqué plus haut que le démontage de la connexion peut s'effectuer manuellement par déformation de l'anneau de verrouillage ***4*** (FIG. 1, 2 et 3), ***14*** (FIG. 7 et 8), ***24*** (FIG. 9 et 10) ou ***34*** (FIG. 11 et 12). Toutefois, pour certaines applications, les utilisateurs demandent que le démontage soit manuellement impossible et qu'au contraire il exige l'emploi d'un outillage spécifique.

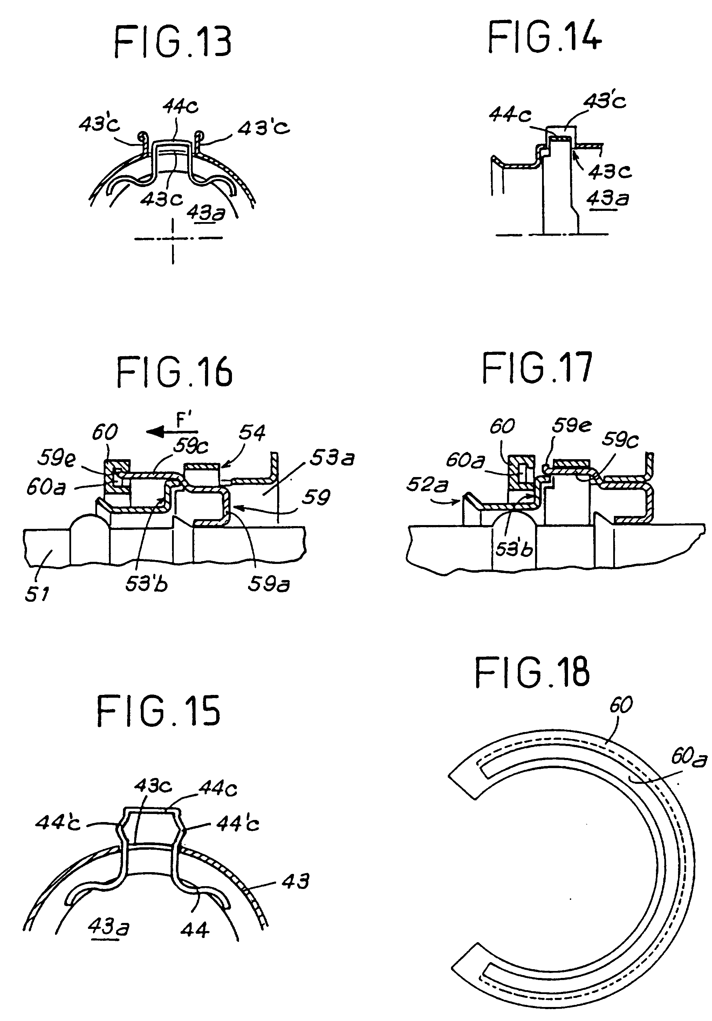

L'invention permet de résoudre facilement ce problème particulier et propose à cet effet une première variante de réalisation visible sur les figures 13 et 14. Les organes déjà décrits sont affectés des mêmes repères que ceux des figures 1 à 3, mais augmentés de 40.

Si l'on se reporte aux figures 13 et 14 on voit que les bords latéraux d'une ouverture ***43c*** ménagée dans la paroi du logement ***43a*** comportent chacun un pli radial ***43'c*,** de préférence terminé par un enroulement à son extrémité libre. Ainsi l'opérateur qui désire démonter la connexion ne peut plus atteindre le pontet ***44c*** avec les doigts mais doit, au contraire, disposer d'un outil, du genre pince, dont les mâchoires présentent une forme spécifique apte à pénétrer entre les plis ***43'c*.** On obtient ainsi une sécurité accrue de la connexion qui interdit tout démontage non autorisé.

Une deuxième variante permettant d'obtenir la même sécurité est représentée sur la figure 15, dans laquelle, à nouveau, les organes déjà décrits sont affectés des mêmes références que ceux des figures 1 à 3, mais augmentées de 40.

Comme cela a déjà été indiqué, le pontet ***44c*** fait saillie à travers l'ouverture ***43c*** ménagée dans la paroi du logement ***43a,*** lorsque l'anneau de verrouillage ***44*** assure l'immobilisation axiale du tube (non représenté) dans l'embout.

Toutefois, on notera que l'une au moins des branches du **U** formant le pontet ***44c*** présente un pli ***44'c*** situé à l'extérieur du logement ***43a*** lorsque l'anneau ***44*** est en position de verrouillage. De préférence et comme représenté sur la figure 15, il existe un pli ***44'c*** sur chacune des branches du pontet qui constituent ainsi des aspérités susceptibles de prendre appui sur la face extérieure de la paroi du logement ***43a*** dans la région de l'ouverture ***43c*.** Bien évidemment, ces aspérités pourraient être réalisées par tout moyen approprié, tel que *"crevé"* ou analogue.

A nouveau, une simple pression radiale manuelle sur le pontet ***44c*** ne suffit plus pour effectuer le démontage de la connexion. Il est au contraire nécessaire, grâce à un outil spécifique approprié, de pincer les branches du pontet pour éliminer l'appui des aspérités sur les bords de l'ouverture ***43c*** avant de pouvoir exercer sur le pontet l'effort radial autorisant le démontage de la connexion.

Il va de soi que toutes les dispositions concernant l'interdiction du démontage manuel peuvent être facilement adaptées par l'homme du métier aux diverses variantes de structure d'embout qui ont été décrites.

La réalisation représentée aux figures 4 à 6 comporte un témoin permanent de verrouillage. Les utilisateurs demandent parfois un témoin complémentaire détachable de la connexion après verrouillage. C'est notamment le cas pour le premier montage de la connexion dans les fabrications en grande série, en particulier dans l'industrie automobile.

L'invention permet, là encore, de résoudre facilement ce problème particulier et propose à cet effet une variante de réalisation visible sur les figures 16, 17 et 18. Les organes déjà décrits sont affectés des mêmes repères que ceux des figures 1 à 3, mais augmentés de 50.

Si l'on se reporte aux figures 16 à 18, on voit que l'extrémité libre d'une patte ***59c*** du témoin permanent et coulissant ***59*** est munie d'un pli radial ***59e*** dirigé vers l'extérieur de l'embout. Le témoin complémentaire ***60*** est constitué par une bague, de préférence en matière plastique, ayant une section en ***C,*** la branche extérieure du ***C*** définissant une gorge ***60a*** susceptible de recevoir le pli radial ***59e*** de la patte ***59c*** et celui de la patte inférieure non représentée. De préférence et comme on le voit sur la figure 18, la bague ***60*** s'étend sensiblement sur trois quarts de cercle seulement.

Au cours du mouvement d'emmanchement (déjà décrit en référence aux figures 4 et 5), les pattes du témoin permanent **59** coulissent, vers la droite de la figure 15, sous les pontets correspondants de l'anneau de verrouillage ***54*** entraînant ainsi la bague ***60*** vers la droite. Ce dernier mouvement de la bague ***60*** est cependant limité, la branche inférieure de sa section en **C** venant prendre appui sur la face radiale externe ***53'b*** du logement ***53a*** de l'anneau de verrouillage. Le verrouillage du tube ***51*** n'étant pas encore obtenu, l'opérateur poursuit le mouvement du tube vers la droite jusqu'à la position représentée sur la figure 17 correspondant au verrouillage complet.

Le pli radial ***59e*** de la patte ***59c,*** de même que celui de la patte inférieure non représentée, quittent alors la gorge ***60a*** de la bague ***60*** par déformation élastique des pattes. La bague ***60*** entoure donc l'entrée ***62a*** de l'embout et peut, si on le souhaite, être retirée radialement de l'embout, en la déformant ou même en la brisant. Bien évidemment la bague ***60*** peut sans inconvénient rester en place autour de l'embout, notamment si elle s'étend sur un cercle complet.

Si la connexion a été démontée, il sera encore possible de vérifier le verrouillage complet du tube après un nouvel emmanchement, grâce à la présence des pattes du témoin permanent ***59*** qui s'effacent en quasi-totalité sous les pontets correspondants.

Il va de soi que ces dernières dispositions concernant le témoin détachable peuvent être adaptées par l'homme du métier aux diverses variantes de structure d'embout qui ont été décrites.

## Revendications

1. Embout de connexion rapide permettant le raccordement étanche d'un tube rigide ***(11)*** pourvu, à quelque distance de son extrémité libre ***(11b)*** destinée à être emmanchée dans l'entrée ***(12a)*** de l'embout, d'un bourrelet ***(11a)*** faisant radialement saillie par rapport à la surface extérieure du tube et présentant un flanc sensiblement radial ***(1c)*** opposé à ladite extrémité, ledit embout présentant un premier logement interne comprenant un joint annulaire d'étanchéité ***(16, 16')*** susceptible de venir en contact avec la surface extérieure du tube entre son extrémité libre et son bourrelet et un deuxième logement interne ***(13a)*** pour recevoir un anneau de verrouillage *(**14**,* ***24, 34, 44)*** présentant un profil généralement oblong et élastiquement déformable dans le sens radial, ledit anneau comportant au moins une zone faisant radialement saillie sur la surface extérieure de l'embout à travers une ouverture ménagée dans celui-ci, ladite zone faisant radialement saillie à l'extérieur de l'embout étant située à une extrémité du grand diamètre du profil oblong cependant que la région centrale dudit anneau est constituée par des portions sensiblement cylindriques ***(14a, 14b ; 24a, 24b ; 34a, 34b)*** dont le diamètre à l'état libre est au plus égal au diamètre du tube ***(11),* caractérisée en ce que** l'anneau de verrouillage ***(14, 24, 34, 44)*** est formé par une bande métallique mince, **en ce que** la zone de cet anneau faisant radialement saillie à l'extérieur de l'embout est constituée par un pontet en **U** inversé ***(14c, 24c, 34c, 44c)*** dont la base forme, pour l'essentiel, la partie radialement saillante à l'extérieur du corps de l'embout, **en ce que** l'anneau de verrouillage ***(14, 24, 34, 44)*** est ouvert et **en ce que** ses deux extrémités libres ***(14d-14'd)*** sont immobilisées sur la paroi de l'embout.

2. Embout de connexion selon la revendication 1, **caractérisé en ce que** les deux extrémités libres **(*14d*, *14'd)*** de l'anneau de verrouillage ***(14)*** sont immobilisées par agrafage sur la paroi de l'embout.

3. Embout de connexion selon la revendication 2, **caractérisé en ce que** la paroi du deuxième logement interne ***(13a)*** présente deux fentes sensiblement axiales **(*13d*, *13'd)*,** dans lesquelles sont respectivement engagées les extrémités libres **(*14d*, *14'd)*** de l'anneau de verrouillage ***(14),*** lesdites extrémités libres étant repliées sur la face extérieure de la paroi du deuxième logement interne.

4. Embout de connexion selon l'une quelconque des revendications 1 à 3, **caractérisé en ce que** les bords antérieurs de l'anneau de verrouillage ***(14 ; 24 ; 34)*** sont évasés, au moins dans la région des portions cylindriques ***(14a, 14b ; 24a, 24b, 34a, 34b)*.**

5. Embout de connexion selon l'une quelconque des revendications 1 à 4, **caractérisé en ce qu'**il comporte un témoin permanent de verrouillage ***(9, 19, 59),*** monté coulissant et constitué par une bague rigide ***(9a, 59a)*** dont le diamètre intérieur est au moins égal au diamètre extérieur du tube mais inférieur au diamètre extérieur de son flanc d'appui ***(1c)*** sur l'anneau de verrouillage, ladite bague possédant, sur sa périphérie extérieure, au moins une patte ***(9a, 19c, 59c)*,** s'étendant axialement et engagée sous la base du pontet ***(14c, 24c, 34c, 44c)*** de l'anneau à travers une ouverture ***(3c, 13c, 33c)*** de l'embout, la longueur axiale de ladite patte étant telle que son extrémité libre est visible au-delà du pontet lorsque le tube n'est pas verrouillé dans la connexion mais disparaît lorsque le tube est verrouillé.

6. Embout de connexion selon la revendication 5, **caractérisé en ce que** la bague ***(59a)*** du témoin de verrouillage possède deux pattes ***(59c)*** diamétralement opposées l'une à l'autre, l'extrémité libre de chaque patte comportant un pli radial ***(59e)*.**

7. Embout de connexion selon la revendication 6, **caractérisé en ce qu'**il comporte un témoin complémentaire de verrouillage, ledit témoin étant détachable et constitué également par une bague ***(60)*** dont la section en forme de C présente une gorge ***(60a)*** susceptible de recevoir le pli radial ***(59e)*** des pattes ***(59c)*.**

8. Embout de connexion selon l'une quelconque des revendications 5 à 8, **caractérisé en ce que** la bague témoin ***(9, 19, 29)*** est pourvue de moyens élastiques ***(9c, 19c, 29f)*** prenant appui sur l'embout pour repousser la bague en permanence vers l'entrée de l'embout.

9. Embout de connexion selon l'une quelconque des revendications 1 à 8, **caractérisé en ce qu'**il comporte une rondelle d'appui ***(50)*** disposée en arrière de l'anneau de verrouillage ***(34)*** par rapport à l'entrée ***(32a)*** de l'embout et montée coulissante dans l'embout entre une position active et une position inactive, ladite rondelle présentant au moins deux zones d'appui ***(40a)*** diamétralement opposées pour les portions cylindriques ***(34a, 34b)*** de l'anneau de verrouillage, le diamètre séparant lesdites zones étant au moins égal au diamètre du bourrelet du tube à emmancher dans l'embout cependant que le diamètre intérieur de la rondelle est inférieur au diamètre dudit bourrelet.

10. Embout de connexion selon l'une quelconque des revendications 1 à 9, **caractérisé en ce que** la ou les ouvertures ***(43c)*** de l'embout pour le passage du ou des pontets ***(44c)*** de l'anneau de verrouillage présentent des bords latéraux ***(43'c)*** radialement saillants pour interdire l'action manuelle sur la base du pontet.

11. Embout de connexion selon l'une quelconque des revendications 1 à 10, **caractérisé en ce que**, sur l'anneau de verrouillage ***(44),*** l'une au moins des branches du pontet ***(44c)*** présente, dans sa zone faisant saillie à l'extérieur de l'embout, un pli ***(44c)*** ou analogue, susceptible de prendre appui, dans la position de verrouillage de l'anneau, sur la face extérieure de la paroi ***(43)*** de l'embout.

## Patentansprüche

1. Schnellverbindungsansatzstück für den dichten Anschluss eines starren Rohrs (11), das in einem Abstand von seinem freien, in den Eingang (12a) des Ansatzstücks einzusteckenden Ende (11b) mit einem Wulst (11a) versehen ist, der von der Außenfläche des Rohrs radial absteht und entgegengesetzt zu diesem Ende eine im Wesentlichen radiale Flanke (1c) aufweist, wobei das Ansatzstück eine erste innere Aufnahme mit einer Ringdichtung (16, 16'), die mit der Außenfläche des Rohrs zwischen dem freien Ende und dem Wulst desselben in Kontakt kommen kann, und eine zweite innere Aufnahme (13a) zur Aufnahme eines in radialer Richtung elastisch verformbaren Verriegelungsrings (14, 24, 34, 44) mit einem im Allgemeinen länglichen Profil aufweist, welcher Ring mindestens eine Zone aufweist, die an der Außenfläche des Ansatzstücks durch eine in diesem vorgesehene Öffnung radial vorspringt, wobei sich die von der Außenseite des Ansatzstücks radial vorspringende Zone an einem Ende des großen Durchmessers des länglichen Profils befindet, während der mittlere Bereich des Rings aus im Wesentlichen zylindrischen Abschnitten (14a, 14b; 24a, 24b; 34a, 34b) besteht, deren Durchmesser im freien Zustand höchstens gleich dem Durchmesser des Rohrs (11) ist, **dadurch gekennzeichnet, dass** der Verriegelungsring (14, 24, 34, 44) durch ein dünnes Metallband gebildet ist, dass die Zone dieses Rings, die an der Außenseite des Ansatzstücks radial vorspringt, durch eine Brücke (14c, 24c, 34c, 44c) in Form eines umgekehrten U gebildet ist, dessen Basis im Wesentlichen den an der Außenseite des Körpers des Ansatzstücks radial vorspringenden Teil bildet, dass der Verriegelungsring (14, 24, 34, 44) offen ist und dass seine beiden freien Ende (14d-14'd) an der Wand des Ansatzstücks festgelegt sind.

2. Verbindungsansatzstück nach Anspruch 1, **dadurch gekennzeichnet, dass** die beiden freien Enden (14d, 14'd) des Verriegelungsrings (14) durch Umbiegen an der Wand des Ansatzstücks festgelegt sind.

3. Verbindungsansatzstück nach Anspruch 2, **dadurch gekennzeichnet, dass** die Wand der zweiten inneren Aufnahme (13a) zwei im Wesentlichen axiale Schlitze (13d, 13'd) aufweist, in denen die freien Enden (14d bzw. 14'd) des Verriegelungsrings (14) eingreifen, wobei die freien Enden über die Außenseite der Wand der zweiten inneren Aufnahme gebogen sind.

4. Verbindungsansatzstück nach einem der Ansprüche 1 bis 3, **dadurch gekennzeichnet, dass** die vorderen Ränder des Verriegelungsrings (14; 24; 34) zumindest im Bereich der zylindrischen Abschnitte (14a, 14b; 24a, 24b; 34a, 34b) konisch erweitert sind.

5. Verbindungsansatzstück nach einem der Ansprüche 1 bis 4, **dadurch gekennzeichnet, dass** es eine permanente Verriegelungsanzeige (9, 19, 59) aufweist, die gleitend gelagert und durch einen starren Ring (9a, 59a) gebildet ist, dessen Innendurchmesser mindestens gleich dem Außendurchmesser des Rohrs, aber kleiner als der Außendurchmesser der Anlageflanke (1c) desselben am Verriegelungsring ist, welcher Ring an seinem Außenumfang mindestens eine Pratze (9a, 19c, 59c) aufweist, die axial verläuft und unter der Basis der Brücke (14c, 24c, 34c, 44c) des Rings quer durch eine Öffnung (3c, 13c, 33c) des Ansatzstücks eingesetzt ist, wobei die axiale Länge der Pratze derart ist, dass ihr freies Ende über die Brücke hinaus sichtbar ist, wenn das Rohr nicht in der Verbindung verriegelt ist, aber verschwindet, wenn das Rohr verriegelt ist.

6. Verbindungsansatzstück nach Anspruch 5, **dadurch gekennzeichnet, dass** der Ring (59a) der Verriegelungsanzeige zwei einander diametral entgegengesetzte Pratzen besitzt, wobei das freie Ende jeder Pratze eine radiale Umbiegung (59e) aufweist.

7. Verbindungsansatzstück nach Anspruch 6, **dadurch gekennzeichnet, dass** er eine komplementäre Verriegelungsanzeige aufweist, welche abnehmbar und ebenfalls durch einen Ring (60) gebildet ist, dessen C-förmiger Querschnitt eine Nut (60a) aufweist, welche die radiale Umbiegung (59e) der Pratzen (59c) aufnehmen kann.

8. Verbindungsansatzstück nach einem der Ansprüche 5 bis 7, **dadurch gekennzeichnet, dass** der Anzeigering (9, 19, 29) mit elastischen Mitteln (9c, 19c, 29f) versehen ist, die am Ansatzstück in Anlage kommen, um den Ring permanent zum Eingang des Ansatzstücks hin zu drücken.

9. Verbindungsansatzstück nach einem der Ansprüche 1 bis 8, **dadurch gekennzeichnet, dass** es eine Anlagescheibe (50) aufweist, die in Bezug auf den Eingang (32a) des Ansatzstücks hinter dem Verriegelungsring (34) angeordnet und im Ansatzstück zwischen einer aktiven Position und einer inaktiven Position gleitbeweglich gelagert ist, welche Scheibe mindestens zwei diametral entgegengesetzte Anlagezonen (40a) für die zylindrischen Abschnitte (34a, 34b) des Verriegelungsrings aufweist, wobei der die Zonen trennende Durchmesser mindestens gleich dem Durchmesser des Wulstes des in das Ansatzstück zu steckenden Rohrs ist, während der Innendurchmesser der Scheibe kleiner als der Durchmesser des Wulstes ist.

10. Verbindungsansatzstück nach einem der Ansprüche 1 bis 9, **dadurch gekennzeichnet, dass** die Öffnung(en) (43c) des Ansatzstücks für den Durchtritt der Brücke(n) (44c) des Verriegelungsrings seitliche Ränder (43'c) aufweisen, die zur Verhinderung eines manuellen Einwirkens auf die Basis der Brücke seitlich abstehen.

11. Verbindungsansatzstück nach einem der Ansprüche 1 bis 10, **dadurch gekennzeichnet, dass** am Verriegelungsring (44) zumindest einer der Schenkel der Brücke (44c) in seiner an der Außenseite des Ansatzstücks vorspringenden Zone eine Umbiegung (44c) od. dgl. aufweist, die in der Verriegelungsposition des Rings auf der Außenseite der Wand (43) des Ansatzstücks in Anlage kommen kann.

## Claims

1. Rapid connector permitting the sealed connection of a rigid pipe (11) provided, at some distance from its free end ***(11b)*** intended to be fixed in the entrance ***(12a)*** of the connector, with a flange ***(11a)*** projecting radially from the outer surface of the pipe and having a substantially radial shoulder ***(1c)*** opposite said end, said connector having a first internal receiver comprising an annular gasket ***(16, 16')*** capable of coming into contact with the outer surface of the pipe between its free end and its flange, and a second internal receiver ***(13a)*** to receive a locking ring ***(14, 24, 34, 44)*** which has a profile which is generally oblong and elastically deformable in the radial direction, said ring comprising at least one zone projecting from the outer surface of the connector through an aperture provided in the latter, said zone projecting radially outside the connector being situated at one end of the large diameter of the oblong profile while the central region of said ring is made up of substantially cylindrical portions ***(14a, 14b; 24a, 24b; 34a, 34b)***, the diameter of which in the free state is at the most equal to the diameter of the pipe ***(11),* characterised in that** the locking ring ***(14, 24, 34, 44)*** is formed by a thin metal band, **in that** the zone of this ring projecting radially outside the connector is constituted by a bridge in the shape of an inverted U **(*14c, 24c, 34c, 44c)*** the base of which forms, mainly, the portion projecting radially outside the body of the connector, **in that** the locking ring ***(14, 24, 34, 44)*** is open and **in that** its two free ends ***(14d-14'd)*** are immobilised on the wall of the connector.

2. Connector according to claim 1, **characterised in that** the two free ends ***(14d, 14'd)*** of the locking ring ***(14)*** are immobilised by being clipped onto the wall of the connector.

3. Connector according to claim 2, **characterised in that** the wall of the second internal receiver ***(13a)*** has two substantially axial slots ***(13d, 13'd)*** in which the free ends ***(14d, 14'd)*** *of* the locking ring ***(14)*** are engaged, said free ends being folded back on the outer face of the wall of the second internal receiver.

4. Connector according to any one of claims 1 to 3, **characterised in that** the front edges of the locking ring ***(14; 24; 34)*** are flared, at least in the region of the cylindrical portions ***(14a, 14b; 24a, 24b; 34a, 34b)*.**

5. Connector according to any one of claims 1 to 4, **characterised in that** it comprises a permanent locking state indicator ***(9, 19, 59)*** mounted sliding and constituted by a rigid band ***(9a, 59a)*,** the inside diameter of which is at least equal to the outside diameter of the pipe but smaller than the outside diameter of its support shoulder ***(1c)*** on the locking ring, said band having, on its outer periphery, at least one leg ***(9a, 19c, 59c)*,** extending axially and engaged below the base of the bridge ***(14c, 24c, 34c, 44c)*** of the ring through an opening ***(3c, 13c, 33c)*** of the connector, the axial length of said leg being such that its free end is visible beyond the bridge when the pipe is not locked in the connection but disappears when the pipe is locked.

6. Connector according to claim 5, **characterised in that** the band ***(59a)*** of the locking state indicator has two legs ***(59c)*** diametrically opposite one another, the free end of each leg including a radial fold ***(59e).***

7. Connector according to claim 6, **characterised in that** it comprises a supplementary locking state indicator, said indicator being detachable and also constituted by a ring ***(60),*** of which the C-shaped section has a throat ***(60a)*** capable of receiving the radial fold ***(59e)*** of the legs ***(59c).***

8. Connector according to any one of claims 5 to 8, **characterised in that** the indicator band ***(9, 19, 29)*** is provided with resilient means **(*9c, 19c, 29f*)** resting on the connector in order to push back the band continuously towards the entrance of the connector.

9. Connector according to any one of claims 1 to 8, **characterised in that** it includes a support washer ***(50)*** disposed behind the locking ring ***(34)*** in relation to the entrance ***(32a)*** of the connector and mounted sliding in the connector between an active position and an inactive position, said washer having at least two diametrically opposite support zones ***(40a)*** for the cylindrical portions ***(34a, 34b)*** of the locking ring, the diameter separating said zones being at least equal to the diameter of the pipe flange to be fixed in the connector, while the inside diameter of the washer is smaller than the diameter of said flange.

10. Connector according to any one of claims 1 to 9, **characterised in that** the opening or openings ***(43c)*** of the connector for the bridge or bridges ***(44c)*** of the locking ring to pass through has radially projecting lateral edges ***(43'c)*** to prevent manual action on the base of the bridge.

11. Connector according to any one of claims 1 to 10, **characterised in that,** on the locking ring ***(44),*** at least one of the branches of the bridge ***(44c)*** has, in its zone projecting outside the connector, a fold ***(44c)*** or similar, capable of resting, in the locking position of the ring, on the outer face of the connector wall ***(43).***
